# EUROPEAN PATENT APPLICATION

(11) **EP 4 517 305 A2**
(43) Date of publication of application: **05.03.2025**
(21) Application number: 24197950.9
(22) Date of filing: 02.09.2024
(51) Int. Cl.: G01N 21/64, G02B 21/16, G02B 21/36, G02B 27/14, G02B 21/24

(54) **IMAGING SYSTEM, SEQUENCING SYSTEM, AND IMAGING METHOD**

(30) Priority: 31.08.2023 CN 202311136547; 31.08.2023 CN 202311133333
(71) Applicant: GeneMind Biosciences Company Limited, Shenzhen City, Guangdong 518023 (CN)
(72) Inventor: HAO, Bozun, Shenzhen City, 518023 (CN); LI, Yang, Shenzhen City, 518023 (CN); LI, Mingze, Shenzhen City, 518023 (CN); WANG, Guangming, Shenzhen City, 518023 (CN)
(74) Representative: Schiweck Weinzierl Koch Patentanwälte Partnerschaft mbB

(57) **Abstract**

The present application discloses an imaging system, a sequencing system, and an imaging method. The imaging system according to embodiments of the present application comprises an objective lens, an optical correction element, and image sensors. The optical correction element can move into or out of an imaging optical path of the imaging system. When the optical correction element moves into the imaging optical path, the optical correction element is positioned between the objective lens and the image sensors. By correcting the aberration generated when the imaging system images a first surface and a second surface of a sample of interest via the optical correction element, the imaging system according to embodiments of the present application can sharply image the first surface and the second surface of the sample interest, thus improving the sequencing efficiency and the sequencing throughput.

## Description

### TECHNICAL FIELD

The present disclosure relates to the field of gene sequencing, and in particular, to an imaging system, a sequencing system, and an imaging method.

### BACKGROUND

Gene sequencing techniques are those for acquiring the base sequence of a DNA or an RNA through detection. The currently dominant sequencing technique is high-throughput sequencing. In high-throughput sequencing, nucleic acid molecules of interest are fixed on the surface of a biochip, during sequencing, bases with an optical detectable label are combined with the bases on the nucleic acid molecules according to the complementary base pairing principle. The optical detectable labels are excited by excitation light to generate optical signals, which are acquired by an imaging system. The imaging system generates images for analysis, so as to identify the types of the bases on the nucleic acid molecules.

In the prior art, imaging systems are usually designed to image a certain surface. However, a biochip may comprise more than one surface on which nucleic acid molecules of interest are immobilized. When imaging systems image additional surfaces, the quality of the acquired images can hardly meet the sequencing requirement, resulting in reduced sequencing efficiency and sequencing throughput.

### SUMMARY

The present disclosure provides an imaging system, a sequencing system, and an imaging method.

The imaging system according to embodiments of the present application comprises an objective lens, an optical correction element, and image sensors. The optical correction element can move into or out of an imaging optical path of the imaging system. When the optical correction element moves into the imaging optical path, the optical correction element is positioned between the objective lens and the image sensors. By correcting the aberration generated when the imaging system images a first surface and a second surface of a sample of interest via the optical correction element, the imaging system according to embodiments of the present application can sharply image the first surface and the second surface of the sample interest, thus improving the sequencing efficiency and the sequencing throughput.

In some certain embodiments, when the optical correction element moves into the imaging optical path, the optical correction element is positioned on the optical axis of the objective lens.

As such, when the optical correction element moves into the imaging optical path, the aberration generated when the imaging system images the first surface of the sample of interest can be eliminated, so as to improve the resolution of the imaging system and allow the imaging system to sharply image the first surface of the sample of interest.

In some certain embodiments, the center deviation between the optical correction element and the objective lens is not greater than 0.5 mm.

When the center deviation between the optical correction element and the objective lens meets the requirements, the image quality correction effect of the optical correction element can be improved, and therefore the imaging quality of the imaging system on the first surface of the sample of interest is improved. In some certain embodiments, the optical correction element comprises an optical lens set configured for eliminating spherical aberration.

As such, the optical correction element can eliminate the spherical aberration generated when the imaging system images the first surface of the sample of interest through the optical lens set.

In some certain embodiments, the optical lens set comprises a first optical lens, a second optical lens, and a third optical lens that are arranged in sequence; the combined focal power of the first optical lens, the second optical lens, and the third optical lens is approximately 0 with a tolerance of ±1%.

As such, the arrangement of three optical lenses in the optical lens set reduces the number of optical lenses and thus the volume. The combination of the optical lens set with an infinite conjugate objective lens can sharply converge optical signals from the first surface to an image surface of the image sensors.

In some certain embodiments, the first optical lens has a negative focal power, the second optical lens has a positive focal power, and the third optical lens has a negative focal power; an object-side surface of one optical lens and an image-side surface of the other optical lens in each pair of adjacent optical lenses are arranged towards each other.

As such, the combined focal power of the first optical lens, the second optical lens, and the third optical lens can be controlled at approximately 0 with a tolerance of ±1%.

In some certain embodiments, an object-side surface of the first optical lens is planar at the optical axis of the first optical lens, and an image-side surface of the first optical lens is concave at the optical axis of the first optical lens; and/or,
an object-side surface of the second optical lens is convex at the optical axis of the second optical lens, and an image-side surface of the second optical lens is convex at the optical axis of the second optical lens; and/or, an object-side surface of the third optical lens is concave at the optical axis of the third optical lens, and an image-side surface of the third optical lens is planar at the optical axis of the third optical lens.

As such, the first optical lens can provide a negative focal power, the second optical lens can provide a positive focal power, and the third optical lens can provide a negative focal power.

In some certain embodiments, a beamsplitter assembly is arranged between the objective lens and the image sensors and configured for splitting an optical signal acquired by the objective lens into a plurality of light beams of different wavelengths; the number of the image sensors is greater than one, and each of the image sensors is configured for acquiring a light beam of at least one wavelength and generating an image.

As such, the beamsplitter assembly splits the light beam from the objective lens into a plurality of light beams and converges the light beams to corresponding image sensors for imaging, so as to achieve simultaneous detection of different optical signals emitted from the sample of interest.

In some certain embodiments, the beamsplitter assembly is configured for splitting the optical signal acquired by the objective lens into a first light beam and a second light beam; the image sensors comprise a first image sensor and a second image sensor; the first image sensor is configured for acquiring the first light beam and generating an image, and the second image sensor is configured for acquiring the second light beam and generating an image.

As such, the beamsplitter assembly splits the light beam from the objective lens into 2 light beams and converges the 2 light beams to corresponding image sensors for imaging, so as to achieve simultaneous detection of different optical signals emitted from the sample of interest.

In some certain embodiments, the beamsplitter assembly comprises a first dichroic mirror, a first mirror, and a second mirror;
the first dichroic mirror is arranged on the optical axis of the objective lens and obliquely with respect to the optical axis of the objective lens; the first dichroic mirror is configured for splitting the optical signal acquired by the objective lens into the first light beam and the second light beam, such that the first light beam is transmitted to the first mirror and the second light beam is reflected to the second mirror; the first mirror is configured for reflecting the first light beam to the first image sensor, and the second mirror is configured for reflecting the second light beam to the second image sensor.

As such, the beamsplitter assembly can separate optical signals with different wave bands and different throughputs, allowing the first image sensor and the second image sensor to simultaneously image on the basis of different optical signals.

In some certain embodiments, the first dichroic mirror and the first mirror are arranged perpendicularly.

As such, the first mirror can change the optical path of the first light beam, such that the first image sensor can be arranged in a proper position to make the structure of the imaging system more compact.

In some certain embodiments, the first dichroic mirror and the second mirror are arranged in parallel.

As such, the second mirror can change the optical path of the second light beam, such that the second image sensor can be arranged in a proper position to make the structure of the imaging system more compact.

In some certain embodiments, the imaging system comprises a first tube lens and a second tube lens; the first tube lens is arranged between the first image sensor and the first mirror and configured for converging the first light beam to the first image sensor; the second tube lens is arranged between the second image sensor and the second mirror and configured for converging the second light beam to the second image sensor.

As such, the combination of the first tube lens and the objective lens converges the first light beam to the first image sensor for imaging, and the combination of the second tube lens and the objective lens converges the second light beam to the second image sensor for imaging.

In some certain embodiments, the imaging system comprises a first filter and a second filter; the first filter is arranged between the first tube lens and the first mirror and configured for filtering the first light beam entering the first tube lens; the second filter is arranged between the second tube lens and the second mirror and configured for filtering the second light beam entering the second tube lens.

As such, the filter can filter light beams, allow the fluorescence waveband to pass through, and cut off the undesired excitation waveband, thereby improving the imaging quality of the image sensors.

In some certain embodiments, the imaging system comprises a light source assembly configured for emitting an excitation light beam through the objective lens to the sample of interest.

As such, the light source assembly can excite the bases with an optically detectable label in the biomolecules to generate optical signals, thus achieving the base sequence determination of the biomolecules.

In some certain embodiments, the light source assembly comprises a first light source and a first lens arranged in an illumination path of the first light source; the first lens is configured for controlling a beam aperture of the first light source into the objective lens.

As such, the control of the beam aperture of the first light source into the objective lens by adjusting the first lens simplifies the structure of the imaging system, reduces the calibration difficulty of the imaging system, improves the luminousness, and makes the excitation light beam evenly irradiate the whole field of view, thus facilitating the improvement of the excitation efficiency and imaging quality.

In some certain embodiments, a bandpass filter is arranged between the first lens and the objective lens and configured for filtering light passing through the first lens.

In some certain embodiments, the imaging system comprises a second dichroic mirror arranged between the bandpass filter and the objective lens; the second dichroic mirror is arranged on the optical axis of the objective lens and obliquely with respect to the optical axis of the objective lens and configured for reflecting light passing through the bandpass filter to the objective lens and transmitting light from the objective lens. As such, the second dichroic mirror reflects the excitation light beam emitted by the first light source passing through the bandpass filter to the objective lens, such that the excitation light beam emitted by the first light source irradiate the sample of interest after passing through the objective lens, so as to excite the sample of interest to generate fluorescence with multiple wavelengths.

In some certain embodiments, the imaging system comprises an autofocus apparatus; the autofocus apparatus comprises a second light source and a focusing sensor; the second light source is configured for projecting a light beam emitted by the second light source onto the sample of interest through the objective lens; the focusing sensor is configured for receiving a light beam reflected by the sample of interest and collimated by the objective lens and converting an optical signal into an electric signal, such that the objective lens moves according to the electric signal and the sample of interest is located on the focal plane of the objective lens.

As such, the autofocus apparatus is mainly configured for marking the object distance after the objective lens finishes the focusing, monitoring the variation of the object distance in real time during the gene sequencing process, and correcting the variation, so as to ensure that the system always focuses sharply, ensure the accuracy of the images acquired by the image sensors, and finally give sharp images within the depth of focus range.

In some certain embodiments, the imaging system further comprises a third dichroic mirror arranged on the optical axis of the objective lens; the third dichroic mirror is configured for reflecting the light beam emitted by the second light source to project the light beam emitted by the second light source onto the sample of interest through the objective lens, and reflecting the light beam reflected by the sample of interest to the focusing sensor; the third dichroic mirror is further configured for transmitting a light beam from the objective lens.

As such, the reflectivity and the transmissivity of the third dichroic mirror are beneficial to the arrangement of the optical path, thus improving the utilization ratio in space and making the structure compacter.

In some certain embodiments, the image sensors are image sensors of an area scan camera or image sensors of a line scan camera.

As such, area array imaging or line scan imaging can be achieved.

In some certain embodiments, the imaging system comprises a driving apparatus connected to the optical correction element; the driving apparatus is configured for driving the optical correction element to move into or out of the imaging optical path.

As such, the driving apparatus can move the optical correction element into or out of the imaging optical path, such that the imaging system can sharply image the first surface and the second surface of the sample of interest separately.

In some certain embodiments, the driving apparatus comprises a driving member and a transmission assembly connected to the driving member; the transmission assembly is connected to the optical correction element, and the driving member drives the optical correction element to move through the transmission assembly.

As such, the driving member and the transmission assembly can move the optical correction element into or out of the imaging optical path, such that the imaging system can sharply image the first surface and the second surface of the sample of interest separately.

In some certain embodiments, the transmission assembly comprises a screw and a slider sleeving the screw; the screw is connected to the driving member, and the slider is connected to the optical correction element; the driving member is configured for driving the screw to rotate, so as to actuate the slider and the optical correction element to move.

As such, the rotation of the screw can move the optical correction element into or out of the imaging optical path, such that the imaging system can sharply image the first surface and the second surface of the sample of interest separately.

In some certain embodiments, the driving apparatus further comprises a seat and a rail arranged on the seat, the slider is slidably arranged on the rail, and the driving member is mounted on the seat.

As such, the rail not only enables the optical correction element to move more smoothly, but also keeps the optical correction element on the same plane when moving into or out of the imaging optical path.

In some certain embodiments, the optical correction element comprises a lens tube, an optical lens set, and a holder; the optical lens set is arranged within the lens tube, and the holder connects the lens tube and the transmission assembly.

Therefore, the lens tube holds the optical lens set, and the holder is connected with the transmission assembly, such that the transmission assembly can actuate the holder to move, thus moving the optical lens set into or out of the imaging optical path.

In some certain embodiments, the imaging system comprises a detection apparatus configured for limiting the travel of movement of the optical correction element.

As such, the movement path of the optical correction element into or out of the imaging optical path can be limited by the detection apparatus.

In some certain embodiments, the detection apparatus comprises a first detector and a second detector; the first detector is configured for triggering a first signal when the optical correction element moves into the imaging optical path, and the second detector is configured for triggering a second signal when the optical correction element moves out of the imaging optical path; the driving apparatus stops operation in response to the first signal or the second signal.

As such, the first detector and the second detector can limit the movement range of the optical correction element and serve as a zero reset.

In some certain embodiments, the first detector is arranged on the side where the optical correction element moves into the imaging optical path, and the second detector is arranged on the side where the optical correction element moves out of the imaging optical path; the detection apparatus comprises a trigger synchronously moving with the optical correction element;

when the optical correction element moves into the imaging optical path, the trigger cooperates with the first detector to allow the first detector to trigger the first signal; when the optical correction element moves out of the imaging optical path, the trigger cooperates with the second detector to allow the second detector to trigger the second signal.

As such, the trigger allows the first detector and the second detector to trigger signals, so as to control the movement range of the optical correction element on the rail.

The sequencing system according to embodiments of the present application comprises the imaging system. By correcting the aberration generated when the imaging system images a first surface and a second surface of a sample of interest via the optical correction element, the imaging system according to this embodiment can sharply image the first surface and the second surface of the sample interest, thus improving the sequencing efficiency and the sequencing throughput.

The imaging method according to embodiments of the present application utilizes an imaging system to image a sample of interest, wherein the sample of interest comprises a first surface and a second surface, the imaging system comprises an objective lens, an optical correction element, and image sensors, and the optical correction element is capable of moving into and out of an imaging optical path of the imaging system; the method comprises:
controlling the optical correction element to move into the imaging optical path to position the optical correction element between the objective lens and the image sensors;
acquiring a first optical signal generated by the first surface of the sample of interest using the image sensors; and controlling the optical correction element to move out of the imaging optical path, and acquiring a second optical signal generated by the second surface of the sample of interest using the image sensors.

As such, by correcting the aberration generated when the imaging system images the first surface and the second surface of the sample of interest via the optical correction element, the imaging system can sharply image the first surface and the second surface of the sample interest, thus improving the sequencing efficiency and the sequencing throughput.

In some certain embodiments, the first surface is positioned between the objective lens and the second surface. As such, the imaging system images the first surface and the second surface with different qualities.

In some certain embodiments, a fluid is present between the first surface and the second surface, and the optical correction element is configured for reducing or eliminating aberration caused by the fluid.

As such, the imaging quality of the imaging system for the second surface can be improved.

Additional aspects and advantages of the present disclosure will in part be illustrated in the following description and become apparent from the following description, or may be learned by practice of the present disclosure.

### BRIEF DESCRIPTION OF THE DRAWINGS

The aforementioned and/or additional aspects and advantages of the present disclosure will become apparent and easily understood from the description of the embodiments with reference to the following drawings, in which:
FIG. 1 illustrates a structural schematic of the imaging system according to embodiments of the present disclosure;
FIG. 2 illustrates a structural schematic of the imaging system according to embodiments of the present disclosure;
FIG. 3 illustrates a schematic of the imaging optical path of the imaging system according to embodiments of the present disclosure;
FIG. 4 illustrates a schematic of the imaging optical path of the imaging system according to embodiments of the present disclosure;
FIG. 5 illustrates wavefront aberration curves of the imaging of the imaging system according to embodiments of the present disclosure;
FIG. 6 illustrates wavefront aberration curves of the imaging of the imaging system according to embodiments of the present disclosure;
FIG. 7 illustrates a structural schematic of the optical lens set according to embodiments of the present disclosure;
FIG. 8 illustrates a structural schematic of the driving apparatus according to embodiments of the present disclosure; and
FIG. 9 is a schematic flowchart of the imaging method according to embodiments of the present disclosure.

Description of reference numerals: 100, imaging system; 10, objective lens; 20, optical correction element; 21, optical lens set; 22, first optical lens; 221, object-side surface of first optical lens; 222, image-side surface of first optical lens; 23, second optical lens; 231, object-side surface of second optical lens; 232, image-side surface of second optical lens; 24, third optical lens; 241, object-side surface of third optical lens; 242, image-side surface of third optical lens; 25, lens tube; 26, holder; 30, image sensor; 31, first image sensor; 32, second image sensor; 40, beamsplitter assembly; 41, first dichroic mirror; 42, first mirror; 43, second mirror; 51, first tube lens; 52, second tube lens; 53, first filter; 54, second filter; 55, bandpass filter; 56, second dichroic mirror; 57, third dichroic mirror; 60, light source assembly; 61, first light source; 62, first lens; 70, autofocus apparatus; 71, second light source; 72, focusing sensor; 80, driving apparatus; 81, driving member; 82, transmission assembly; 83, screw; 84, slider; 85, seat; 86, rail; 87, mounting bracket; 90, detection apparatus; 91, first detector; 92, second detector; 93, trigger; 200, sample of interest; 210, first surface; 211, first optical signal; 220, second surface; 221, second optical signal; 230, first light beam; 240, second light beam.

### DETAILED DESCRIPTION

The embodiments of the present disclosure are described in detail below, and the examples of the embodiments are shown in the accompanying drawings, throughout which identical or similar reference numerals represent identical or similar elements or elements having identical or similar functionality. The embodiments described below by reference to the accompanying drawings are exemplary and illustrative, and should not be construed as limiting the present disclosure.

In the description of the present disclosure, it will be appreciated that orientational or positional relationships indicated by terms such as "central", "longitudinal", "transverse", "length", "width", "thickness", "upper", "lower", "front", "rear", "left", "right", "vertical", "horizontal", "top", "bottom", "inner", "outer", "clockwise", "counterclockwise", and the like are those shown on the basis of the accompanying drawings, and are merely intended to facilitate and simplify the description rather than indicate or imply that the indicated device or element must have a specific orientation and be configured and operated according to the specific orientation. Such relationships should not be construed as limiting the present disclosure. In addition, the terms "first" and "second" are used herein for descriptive purposes only and should not be construed as indicating or implying relative importance or implicitly indicating the number of technical features described. Therefore, features defined with "first" and "second" may explicitly or implicitly include one or more of the features. In the description of the present disclosure, unless otherwise specifically defined, "a plurality of" means two or more.

In the description of the present application, it should be noted that unless otherwise clearly specified and defined, the terms "mount", "link", and "connect" should be interpreted in their broad sense. For example, the connection may be a fixed connection, detachable connection, or integral connection; a mechanic connection, electric connection, or communicative connection; or a direct connection, indirect connection through an intermediate, internal communication of two elements, or interaction between two elements. For those of ordinary skills in the art, the specific meanings of the aforementioned terms in the present disclosure can be interpreted according to specific conditions.

In the present disclosure, unless otherwise clearly specified and defined, a first feature being "above" or "below" a second feature may encompass that the first and second features are in direct contact, and that the first and second features are not in direct contact, but are in contact via an additional feature between them. Also, a first feature being "on", "over" and "above" a second feature encompasses that the first feature is right above or obliquely above the second feature, or simply means that the first feature is at a vertically higher position than the second feature. A first feature being "under", "beneath" and "below" a second feature encompasses that the first feature is right below or obliquely below the second feature, or simply means that the first feature is at a vertically lower position than the second feature.

The following disclosure provides many different embodiments or examples for implementing different structures of the present disclosure. To simplify the disclosure of the present application, the components and settings of specific examples are described below. Certainly, the examples are merely exemplary and are not intended to limit the present disclosure. In addition, reference numerals and/or characters may be repeatedly used in different examples in the present disclosure for simplicity and clarity rather than for indicating the relationship between various embodiments and/or settings discussed. In addition, the present disclosure provides examples of various specific processes and materials, but those of ordinary skills in the art will recognize the application of other processes and/or the use of other materials.

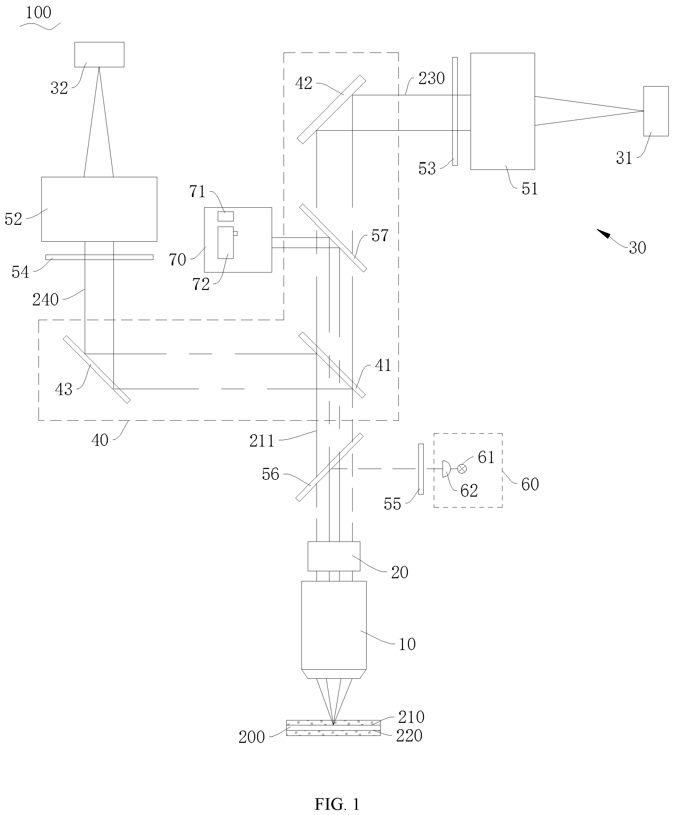

Referring to FIGs. 1 to 4, the imaging system 100 according to embodiments of the present application comprises an objective lens 10, an optical correction element 20, and image sensors 30. The optical correction element 20 can move into or out of an imaging optical path of the imaging system 100. When the optical correction element 20 moves into the imaging optical path, the optical correction element 20 is positioned between the objective lens 10 and the image sensors 30.

By correcting the aberration generated when imaging system 100 images a first surface 210 and a second surface 220 of a sample of interest 200 via the optical correction element 20, the imaging system 100 according to embodiments of the present application can sharply image the first surface 210 and the second surface 220 of the sample interest 200, thus improving the sequencing efficiency and the sequencing throughput.

Specifically, the objective lens 10 is configured for acquiring a first optical signal 211 from the first surface 210 and a second optical signal 221 from the second surface 220. The objective lens 10 may be an available objective lens 10, such as an infinity conjugate objective lens 10, or the objective lens 10 may be a customized objective lens 10. The focal length of the objective lens 10 can be set according to the requirements of the imaging system 100.

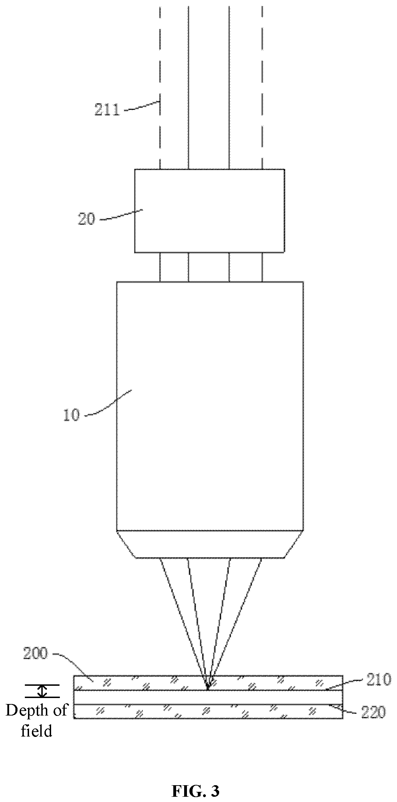

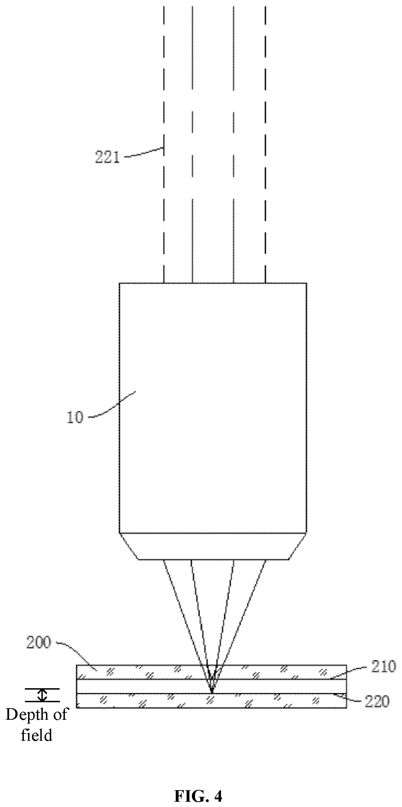

Referring to FIG. 3, when the optical correction element 20 moves into the imaging optical path, the depth of field of the imaging system 100 is shown in FIG. 3, the optical correction element 20 can correct the aberration generated when the imaging system images the first surface 210 and the second surface 220 of the sample of interest 200, and the imaging system 100 can thus sharply image the first surface 210 of the sample of interest 200; referring to FIG. 4, when the optical correction element 20 moves out of the imaging optical path, the depth of field of the imaging system 100 is shown in FIG. 4, and the imaging system 100 can thus sharply image the second surface 220 of the sample of interest 200.

The image sensors 30 are configured for acquiring the first optical signal 211 acquired by the objective lens 10 and generating an image when the optical correction element 20 moves into the imaging optical path, and for acquiring the second optical signal 221 acquired by the objective lens 10 and generating an image when the optical correction element 20 moves out of the imaging optical path. The image sensors 30 are any sensors capable of sensing optical image information and converting same into usable output signals, including but not limited to CCD and CMOS, and may comprise one or more sensors.

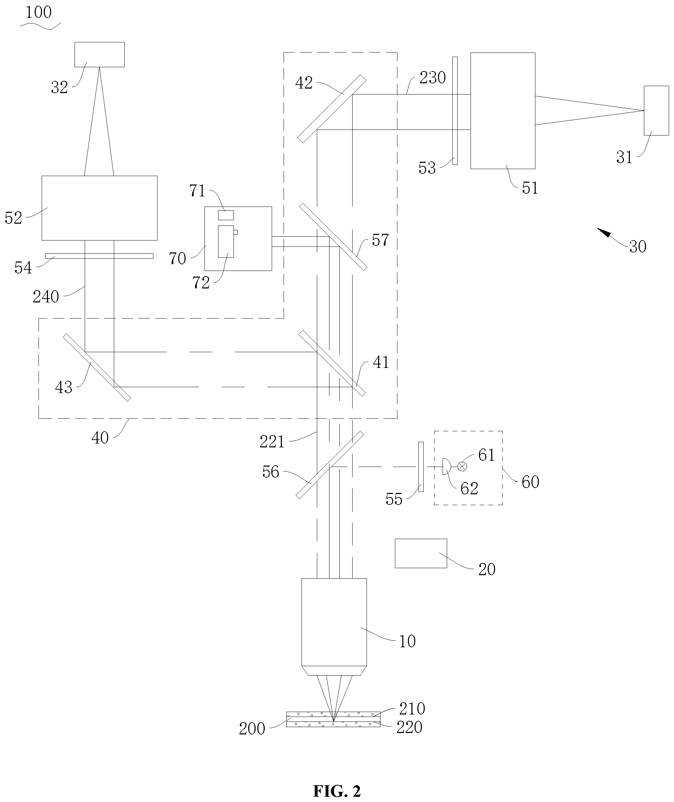

Referring to FIGs. 1 and 2, in some certain embodiments, when the optical correction element 20 moves into the imaging optical path, the optical correction element 20 is positioned on the optical axis of the objective lens 10.

As such, when the optical correction element 20 moves into the imaging optical path, the aberration generated when the imaging system 100 images the first surface 210 of the sample of interest 200 can be eliminated, so as to improve the resolution of the imaging system 100 for imaging the first surface 210 and allow the imaging system 100 to sharply image the first surface 210 of the sample of interest 200.

Specifically, in some embodiments, the optical correction element 20 is arranged parallel to the objective lens 10 and perpendicular to the optical axis of the objective lens 10.

In some certain embodiments, the center deviation between the optical correction element 20 and the objective lens 10 is not greater than 0.5 mm.

When the center deviation between the optical correction element 20 and the objective lens 10 meets the requirements, the image quality correction effect of the optical correction element 20 can be improved, and therefore the imaging quality of the imaging system 100 on the first surface 210 of the sample of interest 200 is improved.

Specifically, the center deviation between the optical correction element 20 and the objective lens 10 refers to the distance between the optical axis of the optical correction element 20 and the optical axis of the objective lens 10, and a smaller center deviation between the optical correction element 20 and the objective lens 10 will result in a higher imaging quality of the imaging system 100 for the first surface 210 of the sample of interest 200.

Referring to FIG. 1, in some certain embodiments, the first surface 210 is positioned between the objective lens 10 and the second surface 220. The imaging system 100 images the first surface 210 and the second surface 220 with different qualities.

Specifically, when the sample of interest 200 is a gene sequencing chip, the first surface 210 may be an interface between a cover and a flow channel, and the second surface 220 may be an interface between a substrate and a flow channel.

In some certain embodiments, a fluid is present between the first surface 210 and the second surface 220, and the optical correction element 20 is configured for reducing or eliminating aberration caused by the fluid.

As such, the imaging quality of the imaging system 100 for the second surface 220 can be improved.

Specifically, as the medium between the first surface 210 and the second surface 220 changes, the imaging quality of the imaging system 100 for the second surface 220 also varies.

In some certain embodiments, the optical correction element 20 comprises an optical lens set 21 configured for eliminating spherical aberration.

As such, the optical correction element 20 can eliminate the spherical aberration generated when the imaging system 100 images the first surface 210 of the sample of interest 200 through the optical lens set 21.

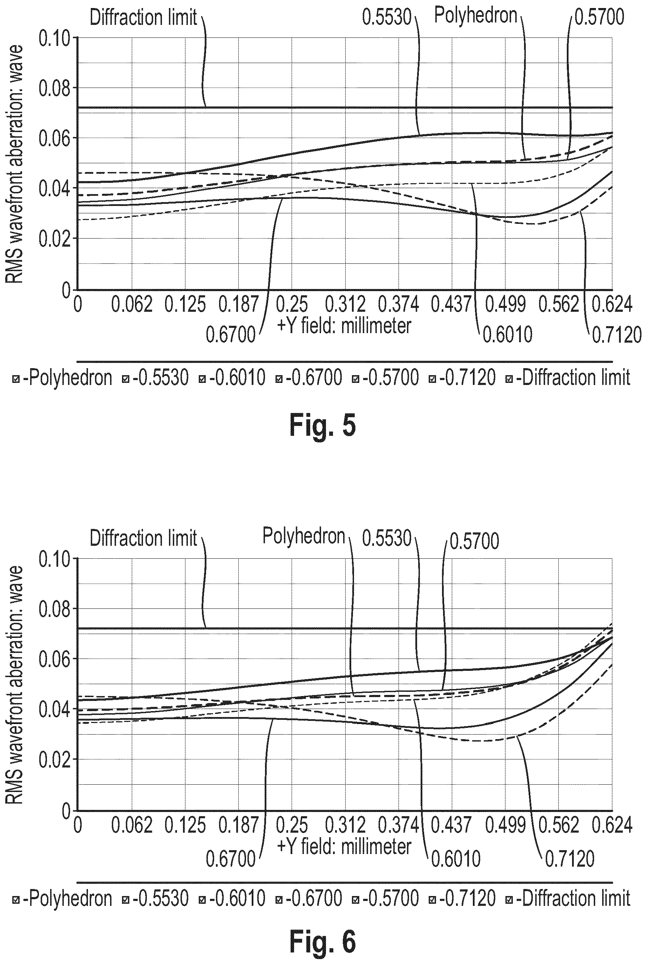

Specifically, the number of optical lenses in the optical lens set 21 may be 3, 4, or 5, and the specific number may be set according to the requirement of the imaging system 100. Referring to FIGs. 5 and 6, FIG. 5 illustrates wavefront aberration curves of the imaging system 100 imaging the first surface 210 of the sample of interest 200 when the optical correction element 20 moves into the imaging optical path, FIG. 6 illustrates wavefront aberration curves of the imaging system 100 imaging the second surface 220 of the sample of interest 200 when the optical correction element 20 moves out of the imaging optical path; as shown in FIGs. 5 and 6, the images obtained by the imaging system 100 imaging the first surface 210 and the second surface 220 of the sample of interest 200 reach the diffraction limit.

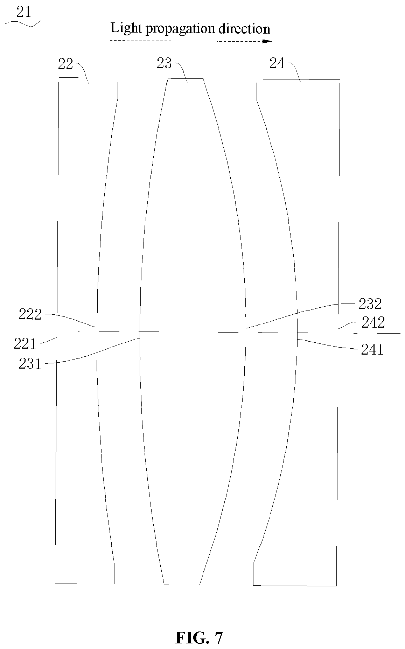

Referring to FIG. 7, in some certain embodiments, the optical lens set 21 comprises a first optical lens 22, a second optical lens 23, and a third optical lens 24 that are arranged in sequence; the combined focal power of the first optical lens 22, the second optical lens 23, and the third optical lens 24 is approximately 0 with a tolerance of ±1%.

As such, the arrangement of three optical lenses in the optical lens set 21 reduces the number of optical lenses and thus the volume. The combination of the optical lens set 21 with an infinite conjugate objective lens 10 can sharply converge optical signals from the first surface 210 to an image surface of the image sensors 30. Specifically, the first optical lens 22, the second optical lens 23, and the third optical lens 24 are arranged in sequence along the light propagation direction (as indicated by the dashed arrow in FIG. 7).

The focal power characterizes the refractive power of the optical imaging system 100 for the incident parallel light beams, and a greater focal power value indicates a more significant angular deflection of the emergent light beams. When the focal power is greater than 0, the emergent light beams are convergent; when the focal power is less than 0, the emergent light beams are divergent; a focal power of 0 indicates a plane refraction. In some certain embodiments, the first optical lens 22 has a negative focal power, the second optical lens 23 has a positive focal power, and the third optical lens 24 has a negative focal power; an object-side surface of one optical lens and an image-side surface of the other optical lens in each pair of adjacent optical lenses are arranged towards each other.

As such, the combined focal power of the first optical lens 22, the second optical lens 23, and the third optical lens 24 can be controlled at approximately 0 with a tolerance of ±1%.

Specifically, the first optical lens 22, the second optical lens 23, and the third optical lens 24 are configured for collectively balancing the aberration, such that the fluorescence signals incident and emergent through the optical lens set 21 are collimated light beams.

Referring to FIG. 7, in some certain embodiments, an object-side surface 221 of the first optical lens is planar at the optical axis of the first optical lens 22, and an image-side surface 222 of the first optical lens is concave at the optical axis of the first optical lens 22; and/or,

an object-side surface 231 of the second optical lens is convex at the optical axis of the second optical lens 23, and an image-side surface 232 of the second optical lens is convex at the optical axis of the second optical lens 23; and/or,

an object-side surface 241 of the third optical lens is concave at the optical axis of the third optical lens 24, and an image-side surface 242 of the third optical lens is planar at the optical axis of the third optical lens 24. As such, the first optical lens 22 can provide a negative focal power, the second optical lens 23 can provide a positive focal power, and the third optical lens 24 can provide a negative focal power.

Specifically, taking the optical lens as a boundary, the side where the object is located is the object side, and the surface of the optical lens proximal to the object side is referred to as the object-side surface; the side where the image of the object is located is the image side, and the surface of the optical lens proximal to the image side is referred to as the image-side surface. The use of plano-concave lenses for the first optical lens 22 and the third optical lens 24 facilitates the installation and calibration of the optical correction element 20. In some certain embodiments, a beamsplitter assembly 40 is arranged between the objective lens 10 and the image sensors 30 and configured for splitting an optical signal acquired by the objective lens 10 into a plurality of light beams of different wavelengths; the number of the image sensors 30 is greater than one, and each of the image sensors 30 is configured for acquiring a light beam of at least one wavelength and generating an image.

As such, the beamsplitter assembly 40 splits the light beam from the objective lens 10 into a plurality of light beams and converges the light beams to corresponding image sensors 30 for imaging, so as to achieve simultaneous detection of different optical signals emitted from the sample of interest 200.

Specifically, the beamsplitter assembly 40 may reflect a part of the light beams according to the wavelength of the light beams and transmit another part of the light beams, or reflect a part of the light beams according to the throughput and transmit another part of the light beams. The number of the image sensors 30 may be 2, 3, or 4, etc.

Referring to FIG. 1, in some certain embodiments, the beamsplitter assembly 40 is configured for splitting the optical signal acquired by the objective lens 10 into a first light beam 230 and a second light beam 240; the image sensors 30 comprise a first image sensor 31 and a second image sensor 32; the first image sensor 31 is configured for acquiring the first light beam 230 and generating an image, and the second image sensor 32 is configured for acquiring the second light beam 240 and generating an image.

As such, the beamsplitter assembly 40 splits the light beam from the objective lens 10 into 2 light beams and converges the 2 light beams to corresponding image sensors 30 for imaging, so as to achieve simultaneous detection of different optical signals emitted from the sample of interest 200.

Referring to FIG. 1, in some certain embodiments, the beamsplitter assembly 40 comprises a first dichroic mirror 41, a first mirror 42, and a second mirror 43;

the first dichroic mirror 41 is arranged on the optical axis of the objective lens 10 and obliquely with respect to the optical axis of the objective lens 10; the first dichroic mirror 41 is configured for splitting the optical signal acquired by the objective lens 10 into the first light beam 230 and the second light beam 240, such that the first light beam 230 is transmitted to the first mirror 42 and the second light beam 240 is reflected to the second mirror 43; the first mirror 42 is configured for reflecting the first light beam 230 to the first image sensor 31, and the second mirror 43 is configured for reflecting the second light beam 240 to the second image sensor 32.

As such, the beamsplitter assembly 40 can separate optical signals with different wave bands and different throughputs, allowing the first image sensor 31 and the second image sensor 32 to simultaneously image on the basis of different optical signals.

In some embodiments, the first dichroic mirror 41 is arranged at an included angle of 45 ° with respect to the optical axis of the objective lens 10. The first dichroic mirror 41 may reflect a part of the light beams according to the wavelength of the light beams and transmit another part of the light beams.

Referring again to FIG. 1, in some certain embodiments, the first dichroic mirror 41 and the first mirror 42 are arranged perpendicularly.

As such, the first mirror 42 can change the optical path of the first light beam 230, such that the first image sensor 31 can be arranged in a proper position to make the structure of the imaging system 100 more compact. In some embodiments, the first dichroic mirror 41 and the first mirror 42 are arranged in parallel.

Referring to FIG. 1, in some certain embodiments, the first dichroic mirror 41 and the second mirror 43 are arranged in parallel.

As such, the second mirror 43 can change the optical path of the second light beam 240, such that the second image sensor 32 can be arranged in a proper position to make the structure of the imaging system 100 more compact.

In some embodiments, the first dichroic mirror 41 and the first mirror 42 are arranged perpendicularly.

Referring to FIG. 1, in some certain embodiments, the imaging system 100 comprises a first tube lens 51 and a second tube lens 52; the first tube lens 51 is arranged between the first image sensor 31 and the first mirror 42 and configured for converging the first light beam 230 to the first image sensor 31; the second tube lens 52 is arranged between the second image sensor 32 and the second mirror 43 and configured for converging the second light beam 240 to the second image sensor 32.

As such, the combination of the first tube lens 51 and the objective lens 10 converges the first light beam 230 to the first image sensor 31 for imaging, and the combination of the second tube lens 52 and the objective lens 10 converges the second light beam 240 to the second image sensor 32 for imaging.

Specifically, the first tube lens 51 and the second tube lens 52 may be tube lenses with the same focal length, or tube lenses with different focal lengths may be designed according to the imaging requirements.

Referring again to FIG. 1, in some certain embodiments, the imaging system 100 comprises a first filter 53 and a second filter 54; the first filter 53 is arranged between the first tube lens 51 and the first mirror 42 and configured for filtering the first light beam 230 entering the first tube lens 51; the second filter 54 is arranged between the second tube lens 52 and the second mirror 43 and configured for filtering the second light beam 240 entering the second tube lens 52.

As such, the filter can filter light beams, allow the fluorescence waveband to pass through, and cut off the undesired excitation waveband, thereby improving the imaging quality of the image sensors 30.

Specifically, the first filter 53 and the first tube lens 51 are separately arranged perpendicularly to the optical path of the first light beam 230 reflected by the first mirror 42, and the first light beam 230 is filtered by the first filter 53 and then converged to the first image sensor 31 by the first tube lens 51.

The second filter 54 and the second tube lens 52 are separately arranged perpendicularly to the optical path of the second light beam 240 reflected by the second mirror 43, and the second light beam 240 is filtered by the second filter 54 and then converged to the second image sensor 32 by the second tube lens 52.

Referring to FIG. 1, in some certain embodiments, the imaging system 100 comprises a light source assembly 60 configured for emitting an excitation light beam through the objective lens 10 to the sample of interest 200.

As such, the light source assembly 60 can excite the bases with an optically detectable label in the biomolecules to generate optical signals, thus achieving the base sequence determination of the biomolecules. Biomolecules are immobilized on the first surface 210 and the second surface 220 of the sample of interest 200, and bases with an optically detectable label are bound to the bases on the biomolecules according to the complementary base pairing principle, the optically detectable labels may be, for example, fluorophores. When the light source assembly 60 irradiates the first surface 210 and the second surface 220 of the sample of interest 200, the fluorophores can be excited to generate fluorescent signals.

Referring to FIG. 1, in some certain embodiments, the light source assembly 60 comprises a first light source 61 and a first lens 62 arranged in an illumination path of the first light source 61; the first lens 62 is configured for controlling a beam aperture of the first light source 61 into the objective lens 10.

As such, the control of the beam aperture of the first light source 61 into objective lens 10 by adjusting the first lens 62 simplifies the structure of the imaging system 100, reduces the calibration difficulty of the imaging system 100, improves the luminousness, and makes the excitation light beam evenly irradiate the whole field of view, thus facilitating the improvement of the excitation efficiency and imaging quality.

Specifically, the first light source 61 is configured for emitting an excitation light beam. When irradiating the sample of interest 200 through the objective lens 10, the excitation light beam excites the biomolecules on the first surface 210 and/or the second surface 220 on the sample of interest 200 to generate fluorescence. The biomolecules on the sample of interest 200 may be a nucleic acid, such as a DNA or RNA sample. Tthe first light source 61 can emit an excitation light beam with at least one wavelength to excite fluorophores on more than one base, so as to achieve the sequencing of multiple bases. Illustratively, the first light source 61 may excite the fluorescence signal of base A and the fluorescence signal of base C simultaneously, or may excite the fluorescence signal of base G and the fluorescence signal of base T simultaneously.

In some embodiments, the first lens 62 may be an aspheric lens. The beam aperture of the excitation light beam entering the objective lens 10 may be controlled by adjusting the distance between the first lens 62 and the objective lens 10, such that the excitation light beam fully enters the objective lens 10 and is projected onto the sample of interest 200 through the objective lens 10, so as to excite the sample of interest 200 to generate fluorescence.

Referring again to FIG. 1, in some certain embodiments, a bandpass filter 55 is arranged between the first lens 62 and the objective lens 10 and configured for filtering light passing through the first lens 62.

As such, the excitation light beam enters the objective lens 10 after passing through the first lens 62 and being bandpass filtered by the bandpass filter 55 arranged between the first lens 62 and the objective lens 10, thus removing the stray light in the excitation light beam and facilitating the further improvement of excitation efficiency and imaging quality.

In some embodiments, the bandpass filter 55 may be a single bandpass filter 55 or a dual bandpass laser filter. Referring to FIG. 1, in some certain embodiments, the imaging system 100 comprises a second dichroic mirror 56 arranged between the bandpass filter 55 and the objective lens 10; the second dichroic mirror 56 is arranged on the optical axis of the objective lens 10 and obliquely with respect to the optical axis of the objective lens 10 and configured for reflecting light passing through the bandpass filter 55 to the objective lens 10 and transmitting light from the objective lens 10.

As such, the second dichroic mirror 56 reflects the excitation light beams emitted by the first light source 61 passing through the bandpass filter 55 to the objective lens 10, such that the excitation light beams emitted by the first light source 61 irradiate the sample of interest 200 after passing through the objective lens 10, so as to excite the sample of interest 200 to generate fluorescence with multiple wavelengths.

In some embodiments, the second dichroic mirror 56 is positioned on the optical axis of the objective lens 10 and is arranged at an included angle of 45° with respect to the optical axis of the objective lens 10. The second dichroic mirror 56 is arranged at an included angle of 90° with respect to the first dichroic mirror 41. The objective lens 10 and the first light source 61 are positioned on the same side of the second dichroic mirror 56, such that the first light source 61 is incident on the objective lens 10.

Referring to FIG. 1, in some certain embodiments, the imaging system 100 comprises an autofocus apparatus 70; the autofocus apparatus 70 comprises a second light source 71 and a focusing sensor 72; the second light source 71 is configured for projecting a light beam emitted by the second light source 71 onto the sample of interest 200 through the objective lens 10; the focusing sensor 72 is configured for receiving a light beam reflected by the sample of interest 200 and collimated by the objective lens 10 and converting an optical signal into an electric signal, such that the objective lens 10 moves according to the electric signal and the sample of interest 200 is located on the focal plane of the objective lens 10.

As such, the autofocus apparatus 70 is mainly configured for marking the object distance after the objective lens 10 finishes the focusing, monitoring the variation of the object distance in real time during the gene sequencing process, and correcting the variation, so as to ensure that the system always focuses sharply, ensure the accuracy of the images acquired by the image sensors 30, and finally give sharp images within the depth of focus range.

In some embodiments, the focusing sensor 72 is positioned on one side of the optical axis of the objective lens 10. The focusing sensor 72 is configured for receiving a light beam reflected by the sample of interest 200 and collimated by the objective lens 10. The focusing sensor 72 determines a distance between a plane of the sample of interest 200 and a focal plane of the objective lens 10 according to the light beam, and converts an optical signal into an electrical signal. The electrical signal is configured for characterizing the distance between the plane of the sample of interest 200 and the focal plane of the objective lens 10, and the plane of the sample of interest 200 is adjusted according to the electrical signal, such that the plane of the sample of interest 200 is positioned at the focal plane of the objective lens 10.

Referring again to FIG. 1, in some certain embodiments, the imaging system 100 further comprises a third dichroic mirror 57 arranged on the optical axis of the objective lens 10; the third dichroic mirror 57 is configured for reflecting the light beam emitted by the second light source 71 to project the light beam emitted by the second light source 71 onto the sample of interest 200 through the objective lens 10, and reflecting the light beam reflected by the sample of interest 200 to the focusing sensor 72; the third dichroic mirror 57 is further configured for transmitting a light beam from the objective lens 10.

As such, the reflectivity and the transmissivity of the third dichroic mirror 57 are beneficial to the arrangement of the optical path, thus improving the utilization ratio in space and making the structure compacter.

In some embodiments, the third dichroic mirror 57 is arranged on the optical axis of the objective lens 10, and the third dichroic mirror 57 and the first dichroic mirror 41 are arranged in parallel. The light beam emitted by the second light source 71 to the autofocus apparatus 70 is reflected by the third dichroic mirror 57 to the first dichroic mirror 41, transmitted by the first dichroic mirror 41 to the second dichroic mirror 56, transmitted by the second dichroic mirror 56 to the objective lens 10, converged to the sample of interest 200 by the objective lens 10, and then returned to the autofocus apparatus 70 according to the original optical path.

In some certain embodiments, the image sensors 30 are image sensors 30 of an area scan camera or image sensors 30 of a line scan camera.

As such, area array imaging or line scan imaging can be achieved.

Specifically, the area scan camera mainly adopts continuous and areal scanning light to achieve the detection of a product so as to give an intuitionistic two-dimensional image. The area scan camera features broad application prospects, and can be applied to the measurement of area, shape, dimensions, position, temperature, and the like. The line scan camera scans an object by using a single beam of scanning light to generate an image with a high resolution. The sensor of the line scan camera only has one row of photosensitive elements. When the imaging system 100 operates, the sample of interest 200 moves at a constant speed, and one or more line scan cameras are used for continuously scanning in rows to uniformly detect the whole surface of the sample of interest 200. Image sensors 30 of an area scan camera or image sensors 30 of a line scan camera may be selected according to the imaging requirements.

In some certain embodiments, the imaging system 100 comprises a driving apparatus 80 connected to the optical correction element 20; the driving apparatus 80 is configured for driving the optical correction element 20 to move into or out of the imaging optical path.

As such, the driving apparatus 80 can move the optical correction element 20 into or out of the imaging optical path, such that the imaging system 100 can sharply image the first surface 210 and the second surface 220 of the sample of interest 200 separately.

Specifically, the driving manner of driving apparatus 80 includes, but is not limited to, electric driving, hydraulic driving, etc., and the driving apparatus 80 may be a pneumatic cylinder, a combination of a motor with a screw 83, or a combination of a motor with a belt. The optical correction element 20 may be fixed to the driving apparatus 80 by a fastener such as a bolt.

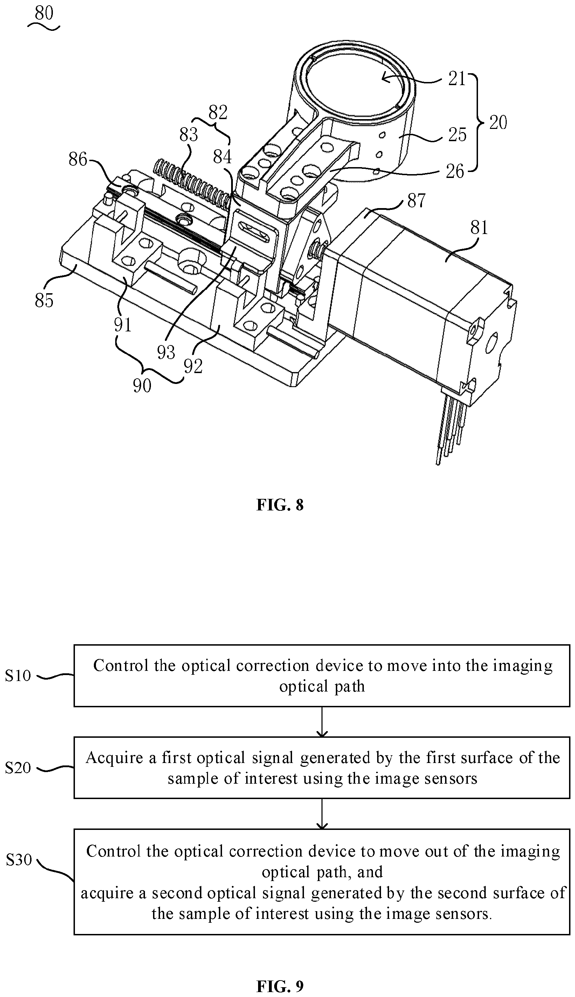

Referring to FIG. 8, in some certain embodiments, the driving apparatus 80 comprises a driving member 81 and a transmission assembly 82 connected to the driving member 81; the transmission assembly 82 is connected to the optical correction element 20, and the driving member 81 drives the optical correction element 20 to move through the transmission assembly 82.

As such, the driving member 81 and the transmission assembly 82 can move the optical correction element 20 into or out of the imaging optical path, such that the imaging system 100 can sharply image the first surface 210 and the second surface 220 of the sample of interest 200 separately.

Specifically, the driving member 81 may be a motor or a pneumatic cylinder. When the driving member 81 is a motor, the transmission assembly 82 is an assembly that converts the rotational motion of the motor into a linear motion.

Referring to FIG. 8, in some certain embodiments, the transmission assembly 82 comprises a screw 83 and a slider 84 sleeving the screw 83; the screw 83 is connected to the driving member 81, and the slider 84 is connected to the optical correction element 20; the driving member 81 is configured for driving the screw 83 to rotate, so as to actuate the slider 84 and the optical correction element 20 to move.

As such, the rotation of the screw 83 can move the optical correction element 20 into or out of the imaging optical path, such that the imaging system 100 can sharply image the first surface 210 and the second surface 220 of the sample of interest 200 separately.

Specifically, the optical correction element 20 may be fixed on the slider 84 by a fastening such as a bolt.

When the driving member 81 operates to actuate the screw 83 to rotate, the slider 84 moves linearly along the length direction of the screw 83, so as to move the optical correction element 20 into or out of the imaging optical path.

Certainly, in other embodiments, the transmission assembly 82 may be a slider-crank assembly, a rack and pinion assembly, or the like that converts rotational motion to linear motion.

Referring again to FIG. 8, in some certain embodiments, the driving apparatus 80 further comprises a seat 85 and a rail 86 arranged on the seat 85, the slider 84 is slidably arranged on the rail 86, and the driving member 81 is mounted on the seat 85.

As such, the rail 86 not only enables the optical correction element 20 to move more smoothly, but also keeps the optical correction element 20 on the same plane when moving into or out of the imaging optical path.

Specifically, the seat 85 is configured for carrying the driving member 81 and the rail 86, and the surface profile of the seat 85 is not strictly defined. Illustratively, the seat 85 may be a generally rectangular plate-shaped structure. In some embodiments, the rail 86 may be fixed on the seat 85 by a fastener such as a bolt. The slider 84 can slide between the two ends of the rail 86. The screw 83 is positioned above the rail 86. The length direction of the screw 83 is parallel to the length direction of the rail 86.

The driving member 81 can be mounted on the seat 85 through a mounting bracket 87. The mounting bracket 87 can be L-shaped, and the driving member 81 can be fixed on the side surface of the mounting bracket 87 by a fastener such as a bolt, and the bottom surface of the mounting bracket 87 can also be fixed on the seat 85 by a fastener such as a bolt.

Referring to FIG. 8, in some certain embodiments, the optical correction element 20 comprises a lens tube 25, an optical lens set 21, and a holder 26; the optical lens set 21 is arranged within the lens tube 25, and the holder 26 connects the lens tube 25 and the transmission assembly 82.

Therefore, the lens tube 25 holds the optical lens set 21, and the holder 26 is connected with the transmission assembly 82, such that the transmission assembly 82 can actuate the holder 26 to move, thus moving the optical lens set 21 into or out of the imaging optical path.

Specifically, in some embodiments, the lens tube 25 may be cylindrical. One end of the holder 26 may be fixed to the outer surface of the lens tube 25 by a fastener or by welding, or the bracket 26 and the lens tube 25 may be integrally formed. The other end of the holder 26 may be fixed to the slider 84 of the transmission assembly 82 by a fastener such as a bolt.

Referring to FIG. 8, in some certain embodiments, the imaging system 100 comprises a detection apparatus 90 configured for limiting the travel of movement of the optical correction element 20.

As such, the movement path of the optical correction element 20 into or out of the imaging optical path can be limited by the detection apparatus 90.

Referring again to FIG. 8, in some certain embodiments, the detection apparatus 90 comprises a first detector 91 and a second detector 92; the first detector 91 is configured for triggering a first signal when the optical correction element 20 moves into the imaging optical path, and the second detector 92 is configured for triggering a second signal when the optical correction element 20 moves out of the imaging optical path; the driving apparatus 80 stops operation in response to the first signal or the second signal.

As such, the first detector 91 and the second detector 92 can limit the movement range of the optical correction element 20 and serve as a zero reset.

Specifically, in some embodiments, the first detector 91 and the second detector 92 are mounted on the seat 85 and on the same side of the rail 86, and the optical correction element 20 is positioned on the other side of the rail 86. The first detector 91 is arranged distal to the driving member 81, and the second detector 92 is arranged proximal to the driving member 81.

Referring to FIG. 8, in some certain embodiments, the first detector 91 is arranged on the side where the optical correction element 20 moves into the imaging optical path, and the second detector 92 is arranged on the side where the optical correction element 20 moves out of the imaging optical path; the detection apparatus 90 comprises a trigger 93 synchronously moving with the optical correction element 20;

when the optical correction element 20 moves into the imaging optical path, the trigger 93 cooperates with the first detector 91 to allow the first detector 91 to trigger the first signal; when the optical correction element 20 moves out of the imaging optical path, the trigger 93 cooperates with the second detector 92 to allow the second detector 92 to trigger the second signal.

As such, the trigger 93 allows the first detector 91 and the second detector 92 to trigger signals, so as to control the movement range of the optical correction element 20 on the rail 86.

Specifically, the trigger 93 is, for example, a sheet member. The trigger 93 may be arranged on the slider 84 on the side proximal to the first detector 91 and the second detector 92. When the optical correction element 20 moves into the imaging optical path, the trigger 93 touches the first detector 91. The detection apparatus 90 transmits the first signal, the driving member 81 stops operating, and the imaging system 100 images the first surface 210 of the sample of interest 200. Similarly, when the optical correction element 20 moves out of the imaging optical path, the trigger 93 touches the second detector 92. The detection apparatus 90 transmits the second signal, the driving member 81 stops operating, and the imaging system 100 images the second surface 220 of the sample of interest 200.

The first detector 91 and/or the second detector 92 include, but are not limited to, photo-electric inductive switches, Hall sensors, micro switches, and the like. For example, when the first detector 91 and the second detector 92 are photo-electric inductive switches, the trigger 93 may block the optical paths of the first detector 91 and the second detector 92, such that the first detector 91 and the second detector 92 trigger responsive signals.

The sequencing system according to embodiments of the present application comprises the imaging system 100.

By correcting the aberration generated when the imaging system images the first surface 210 and the second surface 220 of the sample of interest 200 via the optical correction element 20, the imaging system 100 according to this embodiment can sharply image the first surface 210 and the second surface 220 of the sample interest 200, thus improving the sequencing efficiency and the sequencing throughput. The sequencing system according to embodiments of the present application includes, but is not limited to, systems having sequencing functionality such as gene sequencing systems and nucleic acid sequencing systems, while other systems manufactured as per the same principle are also applicable to embodiments of the present application.

Referring to FIGs. 1 and 9, the imaging method according to embodiments of the present application utilizes an imaging system 100 to image a sample of interest 200, wherein the sample of interest 200 comprises a first surface 210 and a second surface 220, the imaging system 100 comprises an objective lens 10, an optical correction element 20, and image sensors 30, and the optical correction element 20 is capable of moving into and out of an imaging optical path of the imaging system 100; the method comprises:
S10, controlling the optical correction element 20 to move into the imaging optical path to position the optical correction element 20 between the objective lens 10 and the image sensors 30;
S20, acquiring a first optical signal 211 generated by the first surface 210 of the sample of interest 200 using the image sensors 30; and
S30, controlling the optical correction element 20 to move out of the imaging optical path, and acquiring a second optical signal 221 generated by the second surface 220 of the sample of interest 200 using the image sensors 30.

As such, by correcting the aberration generated when the imaging system images the first surface 210 and the second surface 220 of the sample of interest 200 via the optical correction element 20, the imaging system 100 can sharply image the first surface 210 and the second surface 220 of the sample interest 200, thus improving the sequencing efficiency and the sequencing throughput.

In one embodiment, when the driving member 81 is a motor, the imaging system 100 according to embodiments of the present application is applied in such a way: The driving member 81 operates to actuate the screw 83 to rotate. The optical correction element 20 moves into the imaging optical path along the rail 86. When the trigger 93 touches the first detector 91, the detection apparatus 90 transmits a first signal, the driving member 81 stops operating, and the optical correction element 20 is positioned on the optical axis of the objective lens 10. The first light source 61 emits an excitation light beam. The excitation light beam irradiates the sample of interest 200 through the objective lens 10, and excites the sample of interest 200 to generate fluorescence. The objective lens 10 acquires the first optical signal 211 generated by the first surface 210. The first dichroic mirror 41 transmits a part of the first optical signal 211 to form a first light beam 230, and the first light beam 230 is reflected by the first mirror 42 to the first image sensor 31 for imaging. The first dichroic mirror 41 reflects another part of the first optical signal 211 to form a second light beam 240, and the second light beam 240 is reflected by the second mirror 43 to the second image sensor 32 for imaging. The driving member 81 again operates to actuate the screw 83 to rotate. The optical correction element 20 moves out of the imaging optical path along the rail 86. When the trigger 93 touches the second detector 92, the detection apparatus 90 transmits a second signal, the driving member 81 stops operating, and at this time, the optical correction element 20 is positioned on one side of the optical axis of the objective lens 10. The first light source 61 emits an excitation light beam. The excitation light beam irradiates the sample of interest 200 through the objective lens 10, and excites the sample of interest 200 to generate fluorescence. The objective lens 10 acquires the second optical signal 221 generated by the second surface 220. The first dichroic mirror 41 transmits a part of the second optical signal 221 to form a first light beam 230, and the first light beam 230 is reflected by the first mirror 42 to the first image sensor 31 for imaging. The first dichroic mirror 41 reflects another part of the second optical signal 221 to form a second light beam 240, and the second light beam 240 is reflected by the second mirror 43 to the second image sensor 32 for imaging. In the description of this specification, the description of the terms "one embodiment", "some embodiments", "schematic embodiments", "examples", "specific examples", "some examples", or the like, means that the particular features, structures, materials, or characteristics described in the embodiments or examples are included in at least one embodiment or example of the present disclosure. In this specification, the schematic description of the aforementioned terms does not necessarily refer to the same embodiment or example. Moreover, the particular features, structures, materials, or characteristics described may be combined in any embodiment or example in any appropriate manner.

Although the embodiments of the present application have been illustrated and described, it will be appreciated by those of ordinary skills in the art that various changes, modifications, replacements, and variations can be made to these embodiments without departing from the principle and purpose of the present application, and the scope of the present application is defined by the claims and equivalents therefore.

The subject-matter of the present patent application may be characterized by the following items.

Item 1: An imaging system, comprising:
an objective lens, an optical correction element, and image sensors, wherein
the optical correction element can move into or out of an imaging optical path of the imaging system; when the optical correction element moves into the imaging optical path, the optical correction element is positioned between the objective lens and the image sensors.

Item 2: The imaging system according to item 1, wherein when the optical correction element moves into the imaging optical path, the optical correction element is positioned on the optical axis of the objective lens.

Item 3. The imaging system according to item 2, wherein the center deviation between the optical correction element and the objective lens is not greater than 0.5 mm.

Item 4: The imaging system according to any one of items 1-3, wherein the optical correction element comprises an optical lens set configured for eliminating spherical aberration.

Item 5: The imaging system according to item 4, wherein the optical lens set comprises a first optical lens, a second optical lens, and a third optical lens that are arranged in sequence; the combined focal power of the first optical lens, the second optical lens, and the third optical lens is approximately 0 with a tolerance of ±1%.

Item 6: The imaging system according to item 5, wherein the first optical lens has a negative focal power, the second optical lens has a positive focal power, and the third optical lens has a negative focal power; an object-side surface of one optical lens and an image-side surface of the other optical lens in each pair of adjacent optical lenses are arranged towards each other.

Item 7: The imaging system according to item 6, wherein an object-side surface of the first optical lens is planar at the optical axis of the first optical lens, and an image-side surface of the first optical lens is concave at the optical axis of the first optical lens; and/or,
an object-side surface of the second optical lens is convex at the optical axis of the second optical lens, and an image-side surface of the second optical lens is convex at the optical axis of the second optical lens; and/or, an object-side surface of the third optical lens is concave at the optical axis of the third optical lens, and an image-side surface of the third optical lens is planar at the optical axis of the third optical lens.

Item 8: The imaging system according to any one of items 1-7, wherein a beamsplitter assembly is arranged between the objective lens and the image sensors and configured for splitting an optical signal acquired by the objective lens into a plurality of light beams of different wavelengths; the number of the image sensors is greater than one, and each of the image sensors is configured for acquiring a light beam of at least one wavelength and generating an image.

Item 9: The imaging system according to item 8, wherein the beamsplitter assembly is configured for splitting the optical signal acquired by the objective lens into a first light beam and a second light beam; the image sensors comprise a first image sensor and a second image sensor; the first image sensor is configured for acquiring the first light beam and generating an image, and the second image sensor is configured for acquiring the second light beam and generating an image.

Item 10: The imaging system according to item 9, wherein the beamsplitter assembly comprises a first dichroic mirror, a first mirror, and a second mirror;
the first dichroic mirror is arranged on the optical axis of the objective lens and obliquely with respect to the optical axis of the objective lens; the first dichroic mirror is configured for splitting the optical signal acquired by the objective lens into the first light beam and the second light beam, such that the first light beam is transmitted to the first mirror and the second light beam is reflected to the second mirror; the first mirror is configured for reflecting the first light beam to the first image sensor, and the second mirror is configured for reflecting the second light beam to the second image sensor.

Item 11: The imaging system according to item 10, wherein the first dichroic mirror and the first mirror are arranged perpendicularly.

Item 12: The imaging system according to item 10 or 11, wherein the first dichroic mirror and the second mirror are arranged in parallel.

Item 13: The imaging system according to any one of items 10-12, comprising a first tube lens and a second tube lens, wherein the first tube lens is arranged between the first image sensor and the first mirror and configured for converging the first light beam to the first image sensor; the second tube lens is arranged between the second image sensor and the second mirror and configured for converging the second light beam to the second image sensor.

Item 14: The imaging system according to item 13, comprising a first filter and a second filter, wherein the first filter is arranged between the first tube lens and the first mirror and configured for filtering the first light beam entering the first tube lens; the second filter is arranged between the second tube lens and the second mirror and configured for filtering the second light beam entering the second tube lens.

Item 15: The imaging system according to any one of items 1-14, comprising a light source assembly configured for emitting an excitation light beam through the objective lens to a sample of interest.

Item 16: The imaging system according to item 15, wherein the light source assembly comprises a first light source and a first lens arranged in an illumination path of the first light source; the first lens is configured for controlling a beam aperture of the first light source into the objective lens.

Item 17: The imaging system according to item 16, wherein a bandpass filter is arranged between the first lens and the objective lens and configured for filtering light passing through the first lens.

Item 18: The imaging system according to item 17, comprising a second dichroic mirror arranged between the bandpass filter and the objective lens, wherein the second dichroic mirror is arranged on the optical axis of the objective lens and obliquely with respect to the optical axis of the objective lens and configured for reflecting light passing through the bandpass filter to the objective lens and transmitting light from the objective lens.

Item 19: The imaging system according to any one of items 1-18, comprising an autofocus apparatus, wherein the autofocus apparatus comprises a second light source and a focusing sensor; the second light source is configured for projecting a light beam emitted by the second light source onto the sample of interest through the objective lens; the focusing sensor is configured for receiving a light beam reflected by the sample of interest and collimated by the objective lens and converting an optical signal into an electric signal, such that the objective lens moves according to the electric signal and the sample of interest is located on the focal plane of the objective lens.

Item 20: The imaging system according to item 19, further comprising a third dichroic mirror arranged on the optical axis of the objective lens, wherein the third dichroic mirror is configured for reflecting the light beam emitted by the second light source to project the light beam emitted by the second light source onto the sample of interest through the objective lens, and reflecting the light beam reflected by the sample of interest to the focusing sensor; the third dichroic mirror is further configured for transmitting a light beam from the objective lens.

Item 21: The imaging system according to any one of items 1-20, wherein the image sensors are image sensors of an area scan camera or image sensors of a line scan camera.

Item 22: The imaging system according to any one of items 1-21, comprising a driving apparatus connected to the optical correction element, wherein the driving apparatus is configured for driving the optical correction element to move into or out of the imaging optical path.

Item 23: The imaging system according to item 22, wherein the driving apparatus comprises a driving member and a transmission assembly connected to the driving member; the transmission assembly is connected to the optical correction element, and the driving member drives the optical correction element to move through the transmission assembly.

Item 24: The imaging system according to item 23, wherein the transmission assembly comprises a screw and a slider sleeving the screw; the screw is connected to the driving member, and the slider is connected to the optical correction element; the driving member is configured for driving the screw to rotate, so as to actuate the slider and the optical correction element to move.

Item 25: The imaging system according to item 24, wherein the driving apparatus further comprises a seat and a rail arranged on the seat, the slider is slidably arranged on the rail, and the driving member is mounted on the seat.

Item 26: The imaging system according to any one of items 23-25, wherein the optical correction element comprises a lens tube, an optical lens set, and a holder; the optical lens set is arranged within the lens tube, and the holder connects the lens tube and the transmission assembly.

Item 27: The imaging system according to any one of items 22-26, comprising a detection apparatus configured for limiting the travel of movement of the optical correction element.

Item 28: The imaging system according to item 27, wherein the detection apparatus comprises a first detector and a second detector; the first detector is configured for triggering a first signal when the optical correction element moves into the imaging optical path, and the second detector is configured for triggering a second signal when the optical correction element moves out of the imaging optical path; the driving apparatus stops operation in response to the first signal or the second signal.

Item 29: The imaging system according to item 28, wherein the first detector is arranged on the side where the optical correction element moves into the imaging optical path, and the second detector is arranged on the side where the optical correction element moves out of the imaging optical path; the detection apparatus comprises a trigger synchronously moving with the optical correction element;

when the optical correction element moves into the imaging optical path, the trigger cooperates with the first detector to allow the first detector to trigger the first signal; when the optical correction element moves out of the imaging optical path, the trigger cooperates with the second detector to allow the second detector to trigger the second signal.

Item 30: A sequencing system, comprising the imaging system according to any one of items 1-29.

Item 31: An imaging method for imaging a sample of interest via an imaging system, wherein the sample of interest comprises a first surface and a second surface, the imaging system comprises an objective lens, an optical correction element, and image sensors, and the optical correction element is capable of moving into and out of an imaging optical path of the imaging system; the method comprises:
controlling the optical correction element to move into the imaging optical path to position the optical correction element between the objective lens and the image sensors;
acquiring a first optical signal generated by the first surface of the sample of interest using the image sensors; and
controlling the optical correction element to move out of the imaging optical path, and acquiring a second optical signal generated by the second surface of the sample of interest using the image sensors.

Item 32: The method according to item 31, wherein when the optical correction element moves into the imaging optical path, the optical correction element is positioned on the optical axis of the objective lens.

Item 33: The method according to item 32, wherein the center deviation between the optical correction element and the objective lens is not greater than 0.5 mm.

Item 34: The method according to any one of items 31-33, wherein the first surface is positioned between the objective lens and the second surface.

Item 35: The method according to item 34, wherein a fluid is present between the first surface and the second surface, and the optical correction element is configured for reducing or eliminating aberration caused by the fluid.

Item 36: The method according to item 35, wherein the aberration includes spherical aberration.

Item 37: The method according to any one of items 31-36, wherein the optical correction element comprises an optical lens set configured for eliminating spherical aberration.

Item 38: The method according to item 37, wherein the optical lens set comprises a first optical lens, a second optical lens, and a third optical lens that are arranged in sequence; the combined focal power of the first optical lens, the second optical lens, and the third optical lens is approximately 0.

Item 39: The method according to item 38, wherein the first optical lens has a negative focal power, the second optical lens has a positive focal power, and the third optical lens has a negative focal power; an object-side surface of one optical lens and an image-side surface of the other optical lens in each pair of adjacent optical lenses are arranged towards each other.

Item 40: The method according to item 39, wherein an object-side surface of the first optical lens is planar at the optical axis of the first optical lens, and an image-side surface of the first optical lens is concave at the optical axis of the first optical lens; and/or,
an object-side surface of the second optical lens is convex at the optical axis of the second optical lens, and an image-side surface of the second optical lens is convex at the optical axis of the second optical lens; and/or, an object-side surface of the third optical lens is concave at the optical axis of the third optical lens, and an image-side surface of the third optical lens is planar at the optical axis of the third optical lens.

Item 41: The method according to any one of items 35-40, wherein a beamsplitter assembly is arranged between the objective lens and the image sensors and configured for splitting an optical signal acquired by the objective lens into a plurality of light beams of different wavelengths; the number of the image sensors is greater than one, and each of the image sensors is configured for acquiring a light beam of at least one wavelength and generating an image.

Item 42: The method according to item 41, wherein the beamsplitter assembly is configured for splitting the optical signal acquired by the objective lens into a first light beam and a second light beam; the image sensors comprise a first image sensor and a second image sensor; the first image sensor is configured for acquiring the first light beam and generating an image, and the second image sensor is configured for acquiring the second light beam and generating an image.

Item 43: The method according to item 42, wherein the beamsplitter assembly comprises a first dichroic mirror, a first mirror, and a second mirror;
the first dichroic mirror is arranged on the optical axis of the objective lens and obliquely with respect to the optical axis of the objective lens; the first dichroic mirror is configured for splitting the optical signal acquired by the objective lens into the first light beam and the second light beam, such that the first light beam is transmitted to the first mirror and the second light beam is reflected to the second mirror; the first mirror is configured for reflecting the first light beam to the first image sensor, and the second mirror is configured for reflecting the second light beam to the second image sensor.

Item 44: The method according to item 43, wherein the first dichroic mirror and the first mirror are arranged perpendicularly.

Item 45: The method according to item 43 or 44, wherein the first dichroic mirror and the second mirror are arranged in parallel.

Item 46: The method according to any one of items 43-45, wherein the imaging system comprises a first tube lens and a second tube lens; the first tube lens is arranged between the first image sensor and the first mirror and configured for converging the first light beam to the first image sensor; the second tube lens is arranged between the second image sensor and the second mirror and configured for converging the second light beam to the second image sensor.

Item 47: The method according to item 46, wherein the imaging system comprises a first filter and a second filter; the first filter is arranged between the first tube lens and the first mirror and configured for filtering the first light beam entering the first tube lens; the second filter is arranged between the second tube lens and the second mirror and configured for filtering the second light beam entering the second tube lens.

Item 48: The method according to any one of items 31-47, wherein the imaging system comprises a light source assembly configured for emitting an excitation light beam through the objective lens to the sample of interest.

Item 49: The method according to item 48, wherein the light source assembly comprises a first light source and a first lens arranged in an illumination path of the first light source; the first lens is configured for controlling a beam aperture of the first light source into the objective lens.

Item 50: The method according to item 49, wherein a bandpass filter is arranged between the first lens and the objective lens and configured for filtering light passing through the first lens.

Item 51: The method according to item 50, wherein the imaging system comprises a second dichroic mirror arranged between the bandpass filter and the objective lens; the second dichroic mirror is arranged on the optical axis of the objective lens and obliquely with respect to the optical axis of the objective lens and configured for reflecting light passing through the bandpass filter to the objective lens and transmitting light from the objective lens.

Item 52: The method according to any one of items 31-51, wherein the imaging system comprises an autofocus apparatus; the autofocus apparatus comprises a second light source and a focusing sensor; the second light source is configured for projecting a light beam emitted by the second light source onto the sample of interest through the objective lens; the focusing sensor is configured for receiving a light beam reflected by the sample of interest and collimated by the objective lens and converting an optical signal into an electric signal, such that the objective lens moves according to the electric signal and the sample of interest is located on the focal plane of the objective lens.

Item 53: The method according to item 52, wherein the imaging system further comprises a third dichroic mirror arranged on the optical axis of the objective lens; the third dichroic mirror is configured for reflecting the light beam emitted by the second light source to project the light beam emitted by the second light source onto the sample of interest through the objective lens, and reflecting the light beam reflected by the sample of interest to the focusing sensor; the third dichroic mirror is further configured for transmitting a light beam from the objective lens.

Item 54: The method according to any one of items 31-53, wherein the image sensors are image sensors of an area scan camera or image sensors of a line scan camera.

Item 55: The method according to any one of items 31-54, wherein the imaging system comprises a driving apparatus connected to the optical correction element; the driving apparatus is configured for driving the optical correction element to move into or out of the imaging optical path.

Item 56: The method according to item 55, wherein the driving apparatus comprises a driving member and a transmission assembly connected to the driving member; the transmission assembly is connected to the optical correction element, and the driving member drives the optical correction element to move through the transmission assembly.

Item 57: The method according to item 56, wherein the transmission assembly comprises a screw and a slider sleeving the screw; the screw is connected to the driving member, and the slider is connected to the optical correction element; the driving member is configured for driving the screw to rotate, so as to actuate the slider and the optical correction element to move.

Item 58: The method according to item 57, wherein the driving apparatus further comprises a seat and a rail arranged on the seat, the slider is slidably arranged on the rail, and the driving member is mounted on the seat.

Item 59: The method according to any one of items 56-58, wherein the optical correction element comprises a lens tube, an optical lens set, and a holder; the optical lens set is arranged within the lens tube, and the holder connects the lens tube and the transmission assembly.

Item 60: The method according to any one of items 55-59, wherein the imaging system comprises a detection apparatus configured for limiting the travel of movement of the optical correction element.

Item 61: The method according to item 60, wherein the detection apparatus comprises a first detector and a second detector; the first detector is configured for triggering a first signal when the optical correction element moves into the imaging optical path, and the second detector is configured for triggering a second signal when the optical correction element moves out of the imaging optical path; the driving apparatus stops operation in response to the first signal or the second signal.

Item 62: The method according to item 61, wherein the first detector is arranged on the side where the optical correction element moves into the imaging optical path, and the second detector is arranged on the side where the optical correction element moves out of the imaging optical path; the detection apparatus comprises a trigger synchronously moving with the optical correction element;
when the optical correction element moves into the imaging optical path, the trigger cooperates with the first detector to allow the first detector to trigger the first signal; when the optical correction element moves out of the imaging optical path, the trigger cooperates with the second detector to allow the second detector to trigger the second signal.

## Claims

1. An imaging system, comprising:
an objective lens, an optical correction element, and image sensors, wherein
the optical correction element can move into or out of an imaging optical path of the imaging system;
when the optical correction element moves into the imaging optical path, the optical correction element is positioned between the objective lens and the image sensors.

2. The imaging system according to claim 1, wherein when the optical correction element moves into the imaging optical path, the optical correction element is positioned on the optical axis of the objective lens;
the center deviation between the optical correction element and the objective lens is not greater than 0.5 mm.

3. The imaging system according to claim 1 or 2, wherein the optical correction element comprises an optical lens set configured for eliminating spherical aberration; the optical lens set comprises a first optical lens, a second optical lens, and a third optical lens that are arranged in sequence; the combined focal power of the first optical lens, the second optical lens, and the third optical lens is approximately 0 with a tolerance of ±1%.

4. The imaging system according to claim 3, wherein the first optical lens has a negative focal power, the second optical lens has a positive focal power, and the third optical lens has a negative focal power; an object-side surface of one optical lens and an image-side surface of the other optical lens in each pair of adjacent optical lenses are arranged towards each other.

5. The imaging system according to claim 4, wherein an object-side surface of the first optical lens is planar at the optical axis of the first optical lens, and an image-side surface of the first optical lens is concave at the optical axis of the first optical lens; and/or,
an object-side surface of the second optical lens is convex at the optical axis of the second optical lens, and an image-side surface of the second optical lens is convex at the optical axis of the second optical lens; and/or,
an object-side surface of the third optical lens is concave at the optical axis of the third optical lens, and an image-side surface of the third optical lens is planar at the optical axis of the third optical lens.

6. The imaging system according to any one of claims 1-5, wherein a beamsplitter assembly is arranged between the objective lens and the image sensors and configured for splitting an optical signal acquired by the objective lens into a plurality of light beams of different wavelengths; the number of the image sensors is greater than one, and each of the image sensors is configured for acquiring a light beam of at least one wavelength and generating an image;
optionally, the beamsplitter assembly is configured for splitting the optical signal acquired by the objective lens into a first light beam and a second light beam; the image sensors comprise a first image sensor and a second image sensor; the first image sensor is configured for acquiring the first light beam and generating an image, and the second image sensor is configured for acquiring the second light beam and generating an image;
optionally, the beamsplitter assembly comprises a first dichroic mirror, a first mirror, and a second mirror;
the first dichroic mirror is arranged on the optical axis of the objective lens and obliquely with respect to the optical axis of the objective lens; the first dichroic mirror is configured for splitting the optical signal acquired by the objective lens into the first light beam and the second light beam, such that the first light beam is transmitted to the first mirror and the second light beam is reflected to the second mirror; the first mirror is configured for reflecting the first light beam to the first image sensor, and the second mirror is configured for reflecting the second light beam to the second image sensor;
optionally, the first dichroic mirror and the first mirror are arranged perpendicularly;
optionally, the first dichroic mirror and the second mirror are arranged in parallel;
optionally, comprising a first tube lens and a second tube lens, wherein the first tube lens is arranged between the first image sensor and the first mirror and configured for converging the first light beam to the first image sensor; the second tube lens is arranged between the second image sensor and the second mirror and configured for converging the second light beam to the second image sensor;
optionally, comprising a first filter and a second filter, wherein the first filter is arranged between the first tube lens and the first mirror and configured for filtering the first light beam entering the first tube lens; the second filter is arranged between the second tube lens and the second mirror and configured for filtering the second light beam entering the second tube lens;
optionally, comprising a light source assembly configured for emitting an excitation light beam through the objective lens to a sample of interest;
optionally, the light source assembly comprises a first light source and a first lens arranged in an illumination path of the first light source; the first lens is configured for controlling a beam aperture of the first light source into the objective lens;
optionally, a bandpass filter is arranged between the first lens and the objective lens and configured for filtering light passing through the first lens;
optionally, comprising a second dichroic mirror arranged between the bandpass filter and the objective lens, wherein the second dichroic mirror is arranged on the optical axis of the objective lens and obliquely with respect to the optical axis of the objective lens and configured for reflecting light passing through the bandpass filter to the objective lens and transmitting light from the objective lens;
optionally, comprising an autofocus apparatus, wherein the autofocus apparatus comprises a second light source and a focusing sensor; the second light source is configured for projecting a light beam emitted by the second light source onto the sample of interest through the objective lens; the focusing sensor is configured for receiving a light beam reflected by the sample of interest and collimated by the objective lens and converting an optical signal into an electric signal, such that the objective lens moves according to the electric signal and the sample of interest is located on the focal plane of the objective lens;
optionally, further comprising a third dichroic mirror arranged on the optical axis of the objective lens, wherein the third dichroic mirror is configured for reflecting the light beam emitted by the second light source to project the light beam emitted by the second light source onto the sample of interest through the objective lens, and reflecting the light beam reflected by the sample of interest to the focusing sensor; the third dichroic mirror is further configured for transmitting a light beam from the objective lens;
optionally, the image sensors are image sensors of an area scan camera or image sensors of a line scan camera.

7. The imaging system according to any one of claims 1-6, comprising a driving apparatus connected to the optical correction element, wherein the driving apparatus is configured for driving the optical correction element to move into or out of the imaging optical path.

8. The imaging system according to claim 7, wherein the driving apparatus comprises a driving member and a transmission assembly connected to the driving member; the transmission assembly is connected to the optical correction element, and the driving member drives the optical correction element to move through the transmission assembly.

9. The imaging system according to claim 8, wherein the transmission assembly comprises a screw and a slider sleeving the screw; the screw is connected to the driving member, and the slider is connected to the optical correction element; the driving member is configured for driving the screw to rotate, so as to actuate the slider and the optical correction element to move.

10. The imaging system according to claim 9, wherein the driving apparatus further comprises a seat and a rail arranged on the seat, the slider is slidably arranged on the rail, and the driving member is mounted on the seat.

11. The imaging system according to any one of claims 8-10, wherein the optical correction element comprises a lens tube, an optical lens set, and a holder; the optical lens set is arranged within the lens tube, and the holder connects the lens tube and the transmission assembly.

12. The imaging system according to any one of claims 7-11, comprising a detection apparatus configured for limiting the travel of movement of the optical correction element.

13. The imaging system according to claim 12, wherein the detection apparatus comprises a first detector and a second detector; the first detector is configured for triggering a first signal when the optical correction element moves into the imaging optical path, and the second detector is configured for triggering a second signal when the optical correction element moves out of the imaging optical path; the driving apparatus stops operation in response to the first signal or the second signal;
optionally, the first detector is arranged on the side where the optical correction element moves into the imaging optical path, and the second detector is arranged on the side where the optical correction element moves out of the imaging optical path; the detection apparatus comprises a trigger synchronously moving with the optical correction element;
when the optical correction element moves into the imaging optical path, the trigger cooperates with the first detector to allow the first detector to trigger the first signal; when the optical correction element moves out of the imaging optical path, the trigger cooperates with the second detector to allow the second detector to trigger the second signal.

14. A sequencing system, comprising the imaging system according to any one of claims 1-13.

15. An imaging method for imaging a sample of interest via an imaging system, wherein the sample of interest comprises a first surface and a second surface, the imaging system comprises an objective lens, an optical correction element, and image sensors, and the optical correction element is capable of moving into and out of an imaging optical path of the imaging system; the method comprises:
controlling the optical correction element to move into the imaging optical path to position the optical correction element between the objective lens and the image sensors;
acquiring a first optical signal generated by the first surface of the sample of interest using the image sensors; and
controlling the optical correction element to move out of the imaging optical path, and acquiring a second optical signal generated by the second surface of the sample of interest using the image sensors.
